**Europäisches Patentamt**

**European Patent Office**

**Office européen des brevets**

(19)

(11) Numéro de publication: **0 128 817**
**B1**

(12) **FASCICULE DE BREVET EUROPEEN**

(45) Date de publication du fascicule du brevet:
**01.06.88**

(51) Int. Cl.⁴: **F 02 P 5/04,** F 02 D 41/26

(21) Numéro de dépôt: **84401144.5**

(22) Date de dépôt: **05.06.84**

(54) **Procédé de réglage et de mesure du vieillissement d'un moteur à combustion interne.**

(30) Priorité: **10.06.83 FR 8309700**

(43) Date de publication de la demande:
**19.12.84 Bulletin 84/51**

(45) Mention de la délivrance du brevet:
**01.06.88 Bulletin 88/22**

(84) Etats contractants désignés:
**AT BE CH DE GB IT LI NL SE**

(56) Documents cités:
**EP - A - 0 024 733**
**FR - A - 2 301 691**
**US - A - 4 181 944**
**US - A - 4 344 140**

**Revue MTZ N 7/81978, p. 303-309**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Lefevre, Rémi, 38 bis, rue Henry Litolff,**
**F-92700 Colombes (FR)**
Inventeur: **Andre, René, 2, Allée du Prunier Hardy,**
**F-92200 Bagneux (FR)**

## Description

L'invention concerne principalement l'évaluation du vieillissement d'un moteur à combustion interne.

On sait que le réglage des divers paramètres d'un moteur, notamment la richesse ou le temps d'injection, le taux de recirculation des gaz d'échappement, et l'avance à l'allumage, se fait lors de la mise au point du moteur à partir d'éléments neufs, tels que bougies, injecteur et capteur de température, dont on connaît parfaitement les caractéristiques. Cependant, ces caractéristiques, ainsi que le jeu des culbuteurs, subissent une dérive au cours du temps, de sorte que le moteur se dérègle progressivement et présente des instabilités de rotation qui vont en croissant. On dit d'une façon imagée que le moteur tourne moins «rond». D'où l'idée d'évaluer le vieillissement d'un moteur par le calcul des instabilités de rotation.

On connaît déjà plusieurs types de mesure d'instabilité de rotation d'un moteur, la plus connue étant celle décrite dans l'article intitulé «Ein einfaches und objektives Messverfahren für die Laufunruhe» de Bianchi et Latsch, revue M.T.Z. no 7/8, juillet/août 1978. Celle-ci utilise un critère d'instabilité ou rudesse, appelé communément critère Bosch qui utilise les variations de la période T de rotation du moteur au cours de révolutions successives. Ce critère est de la forme:

$$L = \frac{T_i - 2\,T_{i-1} + T_{i-2}}{T_i^3}$$

Ce critère présente cependant un inconvénient majeur qui est d'être extrêmement sensible à la moindre accélération du moteur. De ce fait il n'est utilisable que sur un moteur tournant au banc d'essai à régime constant, et non sur un moteur en utilisation sur un véhicule.

Dans le FR-A-2 301 691 déposé au nom de BOSCH, les variations de la vitesse de révolution du vilebrequin sont mesurées à partir d'un dispositif de repérage qui est préférentiellement la couronne dentée de démarrage. Pour assurer cette fonction de démarrage, la couronne ne peut comporter ni dents manquantes ni zones pleines correspondant à plusieurs dents, de sorte qu'elle ne permet pas un repérage absolu en association avec un capteur et un dispositif de mise en forme des signaux.

Le but de l'invention est d'éliminer les inconvénients précédents en trouvant un procédé de réglage et d'évaluation du vieillissement d'un moteur qui soit aussi précis que possible et qui s'affranchisse en particulier de l'influence de l'accélération volontaire communiquée au moteur.

L'invention consiste essentiellement à utiliser un procédé de mesure du vieillissement d'un moteur à combustion interne et de réglage de son fonctionnement, caractérisé par le fait qu'il comporte les étapes suivantes au cours desquelles.

a) on utilise un dispositif de repérage angulaire du vilebrequin utilisant une cible munie de dents régulièrement espacées sauf lors d'interruptions pour le repérage absolu, ces dents défilant devant un capteur associé à un dispositif de mise en forme des impulsions, ce dispositif pouvant être le même que celui utilisé pour l'allumage électronique du moteur,

b) on détermine sur la cible des fenêtres angulaires en nombre égal au nombre d'explosions par tour, dont la somme des valeurs angulaires sur un tour représente 180°, et dont le début est décalé d'environ 8° à 10° en retard sur le point mort haut correspondant,

c) on calcule à partir d'une fréquence d'horloge par traitement numérique les périodes de passage de ces diverses fenêtres et on en fait la somme sur un tour, puis on calcule une première valeur qui est la valeur absolue de la différence entre cette somme pour un tour et celle du tour précédent,

d) on calcule le temps de la période de rotation sur un tour et on calcule une deuxième valeur comme valeur absolue de la différence entre les périodes de rotation de deux révolutions successives,

e) on calcule une troisième valeur comme valeur absolue de la différence entre le double de la première valeur calculée sous c) et la deuxième valeur calculée sous d),

f) on calcule un critère d'instabilité instantané comme valeur absolue de la différence entre la troisième valeur calculée sous e) et un terme correcteur qui est fonction de la précision des mesures et qui est de l'ordre de 7 microsecondes pour une fréquence d'horloge de 1 MHz,

g) on divise le terme obtenu sous f) par le cube de la période de rotation déterminée précédemment,

h) on calcule un critère relatif comme rapport entre le nombre de fois sur n tours où le critère instantané précédent a dépassé un seuil déterminé expérimentalement, et ce nombre n de tours,

i) enfin, on détermine des tolérances minimale a et maximale b pour le critère relatif, on diagnostique un état de vieillissement du moteur en déterminant la quantité dont le critère s'écarte de ces tolérances et on agit sur au moins un des paramètres de marche du moteur dans le sens voulu pour maintenir ce critère relatif à l'intérieur de tolérances.

D'autres particularités de l'invention apparaîtront dans la description qui va suivre d'un mode de réalisation pris comme exemple et représenté sur le dessin annexé, sur lequel:

la fig. 1 représente le schéma habituel du dispositif de repérage angulaire d'un allumage électronique intégré avec la matérialisation des fenêtres;

la fig. 2 est un graphique schématique montrant la succession en fonction du temps des divers passages des fenêtres;

la fig. 3 est l'organigramme du dispositif d'élaboration du critère relatif;

la fig. 4 est l'organigramme du réglage du paramètre moteur en fonction de ce critère;

les fig. 5 et 6 représentent les variations de ce critère en fonction de la richesse et en fonction de la richesse et de l'avance.

La plupart des moteurs thermiques modernes comportent un allumage électronique intégral, lequel utilise un dispositif de repérage angulaire du vilebrequin avec repérage absolu, incrémentation et interpolation, en particulier celui décrit dans le FR-A-2 446 467 au nom de la demanderesse.

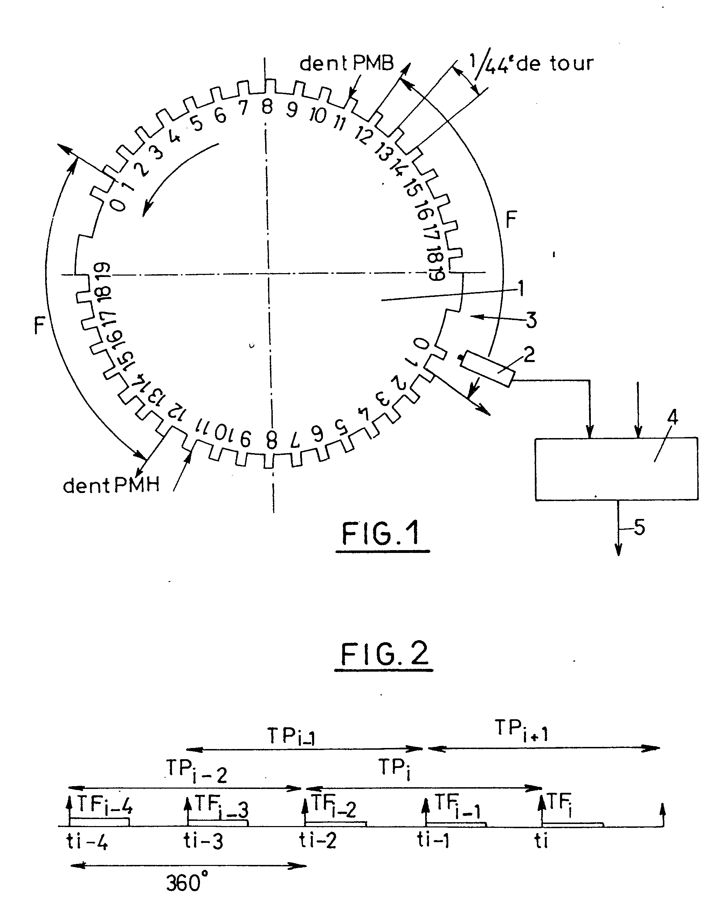

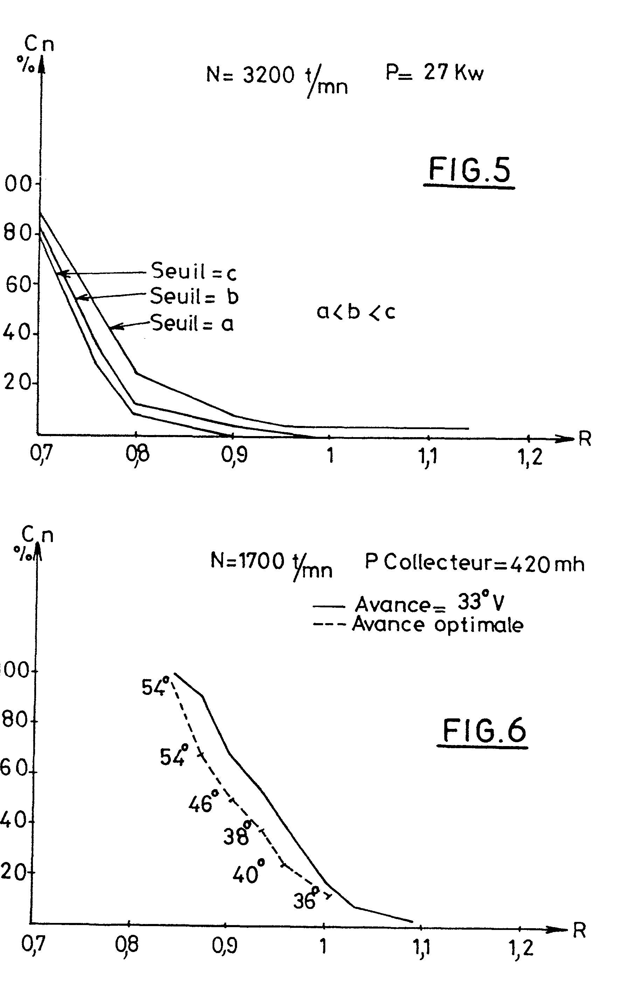

Un mode de réalisation courant est représenté sur la fig. 1 sur laquelle on voir la forme de la cible 1 qui tourne devant le capteur 2. Cette cible comporte dans l'exemple 44 dents régulièrement espacées, excepté en deux endroits diamétralement opposés ou deux dents ont été supprimées et remplacées par une discontinuité 3 servant au repérage absolu mais permettant l'extrapolation des dents manquantes. On obtient ainsi un repérage précis de la position angulaire à chaque instant, d'abord par une méthode incrémentale en comptant le nombre de dents, puis par une interpolation entre les dents, avec en outre un recalage du zéro à chaque demi-tour lors du passage de la discontinuité 3. Un dispositif 4 de mise en forme des impulsions provenant du capteur 2 délivre à sa sortie 5 des impulsions en créneaux qui sont habituellement traitées par un dispositif numérique qui réalise ce repérage précis de position angulaire et commande l'allumage électronique ainsi que ses corrections.

Dans le cas le plus général où le moteur comporte un tel allumage, l'invention se bornera donc à utiliser également ces mêmes impulsions pour les dériver vers le dispositif de mesure d'instabilité de rotation selon l'invention qui fonctionnera en parallèle avec le dispositif d'allumage. Dans les autres cas naturellement, il suffit de rajouter un tel dispositif classique.

Conformément à l'invention, on définit fictivement sur la cible 1 un certain nombre de fenêtres F qui obéissent aux trois règles suivantes:

1°) la somme des valeurs angulaires des diverses fenêtres F sur un tour représente la moitié de l'angle de rotation complet, c'est-à-dire 180°;

2°) les diverses fenêtres sont égales et leur nombre est égal au nombre d'explosions par tour du moteur, lui-même fonction du nombre de cylindres; et

3°) le début de chaque fenêtre est décalé en retard d'environ 8 à 10° par rapport au point mort haut du couple de pistons associés.

Dans le cas le plus général d'un moteur à quatre temps et à quatre cylindres, on a donc deux fenêtres de 90° décalées de 10° par rapport aux points morts haut et bas. Dans l'exemple précédent, ce décalage correspond sensiblement à une dent.

On peut expliquer la raison de ce choix par le fait qu'à chaque demi-tour du vilebrequin, on peut distinguer une phase au cours de laquelle la détente dans un des cylindres est prépondérante, et sujette à variation selon l'existence possible de ratés ou de défauts d'allumage, et une deuxième phase au cours de laquelle c'est la compression dans un cylindre opposé qui est prépondérante, phase qui correspond à un travail résistant et sensiblement constant.

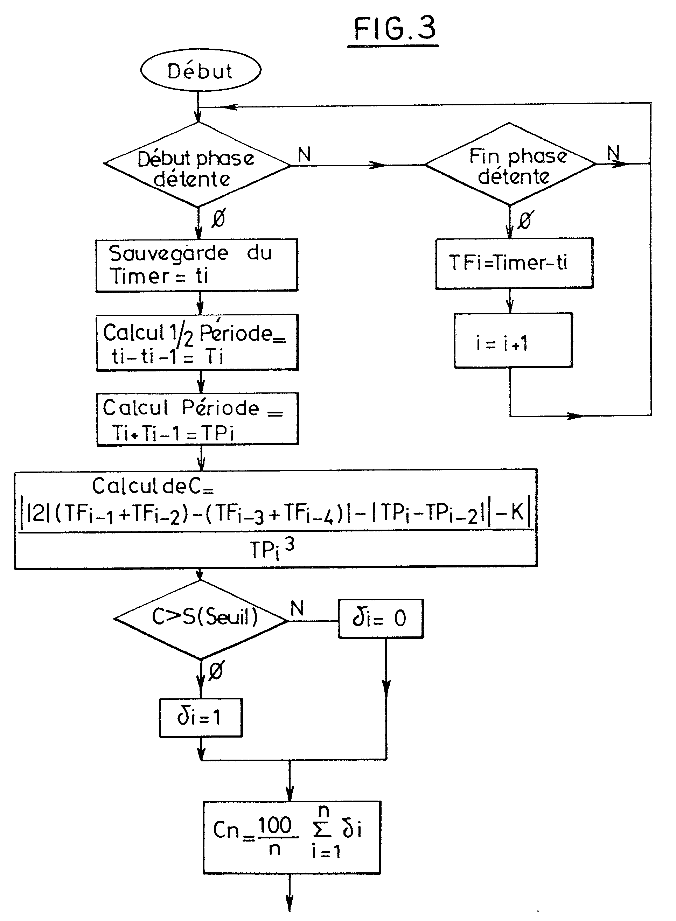

Conformément à l'invention, on utilise un «timer» c'est-à-dire un générateur de signal d'horloge à quartz avec comptage ininterrompu qui fournit ainsi diverses valeurs numériques t représentées sur la fig. 2 pour diverses valeurs croissantes de l'indice i. Par le calcul numérique, à partir de ces valeurs du temps repérées pour les débuts et fins de chaque fenêtre de chaque tour de la cible 1, on détermine les durées TF successives de passage des fenêtres, et les périodes TP de révolution complète, puis à partir de ces diverses valeurs on effectue successivement, comme représenté sur l'organigramme de la fig. 3, les opérations suivantes:

1°) on calcule la somme des périodes TF de passage des fenêtres pour le tour qui vient de se terminer, ce qui élimine les défauts de denture éventuels de la cible 1, puis la valeur de cette même quantité pour le tour qui précède, et enfin la valeur absolue de la différence entre ces deux sommes, c'est-à-dire la variation du temps de passage global des fenêtres.

2°) On calcule les périodes TP de révolution complète de la cible 1 pour le tour qui s'achève et le tour précédent, et la valeur absolue de la différence entre ces deux périodes.

3°) On calcule enfin la valeur absolue de la différence entre le double de la valeur absolue calculée sous 1 et la valeur absolue calculée sous 2.

4°) On retranche à la quantité calculée sous 3 un terme correctif K correspondant à l'erreur moyenne de calcul liée à la précision du «timer», quantité évaluée à 7 microsecondes pour une fréquence d'horloge de 1 MHz.

5°) On calcule la valeur absolue de la quantité précédente et on la divise par le cube de la dernière période TP calculée.

On obtient donc, à la suite de ces opérations,

$$C = \frac{\left| \, |2|(TF_{i-1} + TF_{i-2}) - (TF_{i-3} + TF_{i-4})| - |TP_i - TP_{i-2}| \, | - K \right|}{TP_i^3}$$

L'expérience montre que ce critère G, qui a comme dimension l'inverse du carré d'un temps, varie très fortement d'un tour à l'autre en fonction de la présence ou non de ratés d'allumage. Pour obtenir une quantité plus pondérée et exploitable directement, on calcule donc, comme représenté sur la suite de l'organigramme de la fig. 3, un critère relatif Cn de la manière suivante:

On opère sur n période, et l'on compte au cours de ces n périodes, le nombre de fois où la valeur C a dépassé un seuil S fixé à l'avance, et l'on divise le nombre ainsi obtenu par le nombre n, ce qui donne finalement un pourcentage sans dimension.

On observe sur les courbes représentées sur les fig. 5 et 6 que ce critère relatif est une fonction décroissante de la richesse R et que l'avance à l'allumage a une influence non négligeable.

Sur véhicule, on observe que le rapport de boîte n'influe pratiquement pas sur le niveau de ce critère. De même, et c'est là le résultat particulièrement intéressant par rapport à l'état de la technique, le critère est indépendant de l'accélération du véhicule, tout au moins lorsque cette accélération demeure modérée. Pour s'affranchir de l'influence des accélérations brutales, on agence le dispositif pour qu'il n'effectue pas les calculs indiqués lorsque la variation de pression d'un tour à l'autre dépasse un seuil donné.

En fonction de ces résultats expérimentaux, on comprend que si l'on cherche à réaliser un coefficient relatif d'irrégularité Cn le plus faible possible, on est conduit inmanquablement à adopter une richesse excessive, incompatible avec les économies d'énergie. Inversement, si l'on tolère un important coefficient d'irrégularité pour permettre une économie d'énergie maximale, on est conduit avec la dérive à ce que le moteur atteigne trop vite des conditions de fonctionnement inacceptables.

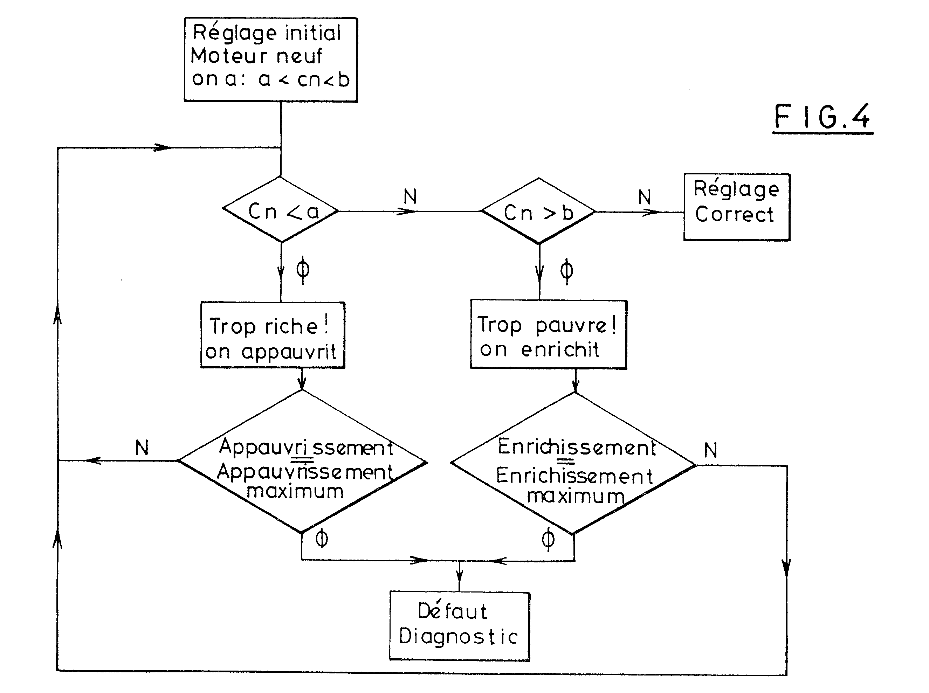

Pour cette raison, l'invention prévoit, lors du réglage initial du moteur neuf, de déterminer des tolérances minimale a et maximale b pour le pourcentage de Cn, et ensuite à ramener à chaque réglage cette valeur du critère à l'intérieur des tolérances en modifiant la richesse en conséquence. On suppose en effet, que lorsque la valeur de Cn sort des limites tolérées, c'est la variation de richesse qui est la cause déterminante de ce déréglement, surtout si comme on l'a supposé on utilise un allumage électronique intégral qui est pratiquement inderéglable. On doit alors diminuer la richesse si Cn est inférieur à a et l'augmenter si Cn est supérieur à b, comme représenté sur l'organigramme de la fig. 4.

Cette action peut être manuelle, mais elle peut facilement être rendue automatique puisque le dispositif selon l'invention élabore en permanence la valeur de Cn et qu'il est facile d'agir numériquement sur la richesse, en particulier lorsqu'il s'agit d'une injection électronique dont le temps d'injection est lui-même numérisé. Ceci permet au véhicule de fonctionner toujours avec un coefficient d'instabilité optimal et proche du réglage initial. En même temps, cela fournit une indication permanente sur l'état de vieillissement du moteur en mesurant la variation de richesse qui a été ainsi déterminée. Lorsqu'elle sort des tolérances fixées, en particulier, on peut diagnostiquer automatiquement un état de vieillissement du moteur et le signaler au conducteur.

Il est important de noter que tous ces résultats s'obtiennent à l'aide d'un simple microprocesseur, par exemple un 6801, complété d'une mémoire vive et d'une mémoire morte contenant la programmation convenable établie en fonction des organigrammes qui précèdent, et les données expérimentales, notamment les valeurs de K, S, n, a et b.

## Revendications

1. Procédé de mesure du vieillissement d'un moteur à combustion interne et de réglage de son fonctionnement, caractérisé par le fait qu'il comporte les étapes suivantes au cours desquelles

a) on utilise un dispositif de repérage angulaire du vilebrequin utilisant une cible (1) munie de dents régulièrement espacées sauf lors d'interruptions (3) pour le repérage absolu, ces dents défilant devant un capteur (2) associé à un dispositif (4) de mise en forme des impulsions, ce dispositif pouvant être le même que celui utilisé pour l'allumage électronique du moteur,

b) on détermine sur la cible (1) des fenêtres angulaires (F) en nombre égal au nombre d'explosions par tour, dont la somme des valeurs angulaires sur un tour représente 180°, et dont le début est décalé d'environ 8° à 10° en retard sur le point mort haut correspondant,

c) on calcule à partir d'une fréquence d'horloge par traitement numérique les périodes de passage (TF) de ces diverses fenêtres et on en fait la somme sur un tour, puis on calcule une première valeur qui est la valeur absolue de la différence entre cette somme pour un tour et celle du tour précédent,

d) on calcule le temps de la période de rotation sur un tour (TP) et on calcule une deuxième valeur comme valeur absolue de la différence entre les périodes de rotation de deux révolutions successives,

e) on calcule une troisième valeur comme valeur absolue de la différence entre le double de la première valeur calculée sous c) et la deuxième valeur calculée sous d),

f) on calcule un critère d'instabilité instantané (C) comme valeur absolue de la différence entre la troisième valeur calculée sous (e) et un terme correcteur (K) qui est fonction de la précision des mesures et qui est de l'ordre de 7 microsecondes pour une fréquence d'horloge de 1 MHz,

g) on divise le terme obtenu sous f) par le cube de la période de rotation (TP) déterminée précédemment,

h) on calcule un critère relatif (Cn) comme rapport entre le nombre de fois sur n tours où le critère instantané précédent (C) a dépassé un seuil (S) déterminé expérimentalement, et ce nombre n de tours, enfin

i) on détermine des tolérances minimale a et maximale b pour le critère relatif (Cn), on diagnostique un état de vieillissement du moteur en déterminant la quantité dont le critère (Cn) s'écarte de ces tolérances et on agit sur au moins un des paramètres de marche du moteur dans le sens voulu pour maintenir ce critère relatif (Cn) à l'intérieur de tolérances (a, b).

2. Procédé selon la revendication 1, caractérisé par le fait que le paramètre choisi de marche du moteur est la richesse du mélange ou le temps d'injection.

3. Procédé selon la revendication 1 ou 2, caractérisé par le fait qu'il comporte une étape supplémentaire de commande d'un témoin de diagnostic de vieillissement du moteur.

**Patentansprüche**

1. Verfahren zur Messung des Alterns eines Verbrennungsmotors und zur Regelung seines Betriebs, dadurch gekennzeichnet, dass es die folgenden Verfahrensschritte aufweist, während denen:
a) eine Vorrichtung zur winkelmässigen Markierung der Kurbelwelle verwendet wird, die eine Scheibe (1) enthält, welche mit Zähnen versehen ist, die bis auf Unterbrechungen (3) zur absoluten Markierung in regelmässigen Abständen voneinander angeordnet sind, wobei diese Zähne einen Fühler (2) passieren, der einer Impulsformungsanordnung (4) zugeordnet ist, welche dieselbe wie diejenige für die elektronische Zündung des Motors sein kann,
b) winkelmässige Fenster (F) auf der Scheibe (1) festgelegt werden, deren Anzahl gleich derjenigen der Explosionen pro Umdrehung ist, deren Summe der Winkelwerte für eine Umdrehung 180° entspricht und deren Beginn ungefähr 8 bis 10° nach dem zugehörigen oberen Totpunkt verschoben ist,
c) ausgehend von einer Zeitfrequenz durch numerische Verarbeitung die Zeiten des Vorbeilaufs (TF) dieser verschiedenen Fenster berechnet werden, daraus eine Summe für eine Umdrehung gebildet wird, danach ein erster Wert berechnet wird, der der Absolutwert ist der Differenz zwischen dieser Summe für eine Umdrehung und derjenigen der vorhergehenden Umdrehung,
d) die Zeit der Rotationsperiode für eine Umdrehung (TP) berechnet wird sowie ein zweiter Wert berechnet als Absolutwert der Differenz zwischen den Rotationsperioden zweier aufeinanderfolgender Umdrehungen,
e) ein dritter Wert berechnet wird als Absolutwert der Differenz zwischen dem Doppelten des ersten berechneten Wertes gemäss c) und dem zweiten berechneten Wert gemäss d),
f) ein momentanes Instabilitätskriterium (C) berechnet wird als Absolutwert der Differenz zwischen dem dritten berechneten Wert gemäss e) und einem Korrekturfaktor (K), der eine Funktion der Präzision der Messungen ist und der der Grössenordnung von 7 Mikrosekunden für eine Zeitfrequenz von 1 MHz ist,
g) der gemäss f) erhaltene Wert durch die Kubikzahl der oben festgelegten Rotationsperiode (TP) geteilt wird,
h) ein Relativwert (Cn) berechnet wird als Verhältnis zwischen derjenigen Anzahl während n Umdrehungen, in denen das obige Momentankriterium (C) einen experimentell festgelegten Schwellwert (S) überschritten hat, und der Anzahl n der Umdrehungen und schliesslich
i) die Minimaltoleranz a und die Maximaltoleranz b für den relativen Wert (Cn) bestimmt werden, der Alterszustand diagnostiziert wird, die Grösse bestimmt wird, um die der Wert (Cn) von den Toleranzen abweicht und auf wenigstens einer der Funktionsparameter des Motors in gewünschter Richtung eingewirkt wird, um diesen Relativwert (Cn) innerhalb der Toleranzen (a, b) zu halten.

2. Verfahren nach Anspruch 1, dadurch gekennzeichnet, dass der ausgewählte Funktionsparameter des Motors die Gemischanreicherung oder die Einspritzzeit ist.

3. Verfahren nach Ansprüchen 1 oder 2, dadurch gekennzeichnet, dass es den zusätzlichen Schritt einer Steuerung, einer Altersanzeigevorrichtung für den Motor aufweist.

**Claims**

1. A process for measuring the ageing of an internal combustion engine and for regulating operation thereof characterised in that it involves the following steps comprising:
a) using a device for angular detection of the position of the crankshaft using a target (1) provided with teeth which are regularly spaced except in respect of interruptions (3) for absolute detection, said teeth passing in front of a sensor (2) associated with a pulse shaping means (4), which means may be the same as that used for the electronic ignition of the engine,
b) determining on the target (1) angular windows (F) which are equal in number to the number of explosions per revolution, of which the sum of the angular values over a revolution represents 180° and whose beginning is displaced by about 8° to 10° in the retard direction relative to the corresponding top dead centre point,
c) calculating from a clock frequency by digital processing the periods (TF) for which said various windows pass and producing the sum thereof over a revolution, and then calculating a first value which is the absolute value of the difference between said sum for a revolution and that of the previous revolution,
d) calculating the time of the period of rotation over a revolution (TP) and calculating a second value as the absolute value of the difference between the periods of rotation of two successive revolutions,
e) calculating a third value as the absolute value of the difference between double the first value calculated in c) and the second value calculated in d),
f) calculating an instantaneous instability criterion (C) as the absolute value of the difference between the third value calculated in e) and a correction term (K) which is a function of the level of precision of the measurements and which is of the order of 7 microseconds for a clock frequency of 1 MHz,
g) dividing the term obtained in f) by the cube of the period of rotation (TP) which was previously determined,
h) calculating a relative criterion (Cn) as the relationship between the number of times over n revolutions in which the preceding instantaneous criterion (C) has exceeded an experimentally determined threshold (S), and said number n of revolutions, and finally

i) determining the minimum and maximum tolerances a and b respectively for the relative criterion (Cn), diagnosing a state of ageing of the engine by determining the amount by which the criterion (Cn) deviates from said tolerances and acting on at least one of the operating parameters of the engine in the required direction to maintain said relative criterion (Cn) within the tolerances (a, b).

2. A process according to claim 1 characterised in that the selected engine operating parameter is the richness of the mixture or the injection time.

3. A process according to claim 1 or claim 2 characterised in that it comprises an additional step of controlling an engine ageing diagnostic telltale.

dent PMB

1/44ᵉ de tour

dent PMH

F

F

0 1 2 3 4 5 6 7 8 9 10 11 12 13 14 15 16 17 18 19

16 17 18 19

0 1 2 3 4 5 6 7 8 9 10 11 12 13 14 15

0 1

1

3

2

4

5

## FIG.1

## FIG.2

$TP_{i-1}$

$TP_{i+1}$

$TP_{i-2}$

$TP_i$

$TF_{i-4}$    $TF_{i-3}$    $TF_{i-2}$    $TF_{i-1}$    $TF_i$

$ti-4$        $ti-3$        $ti-2$        $ti-1$        $ti$

360°

FIG.5

$N = 3200 \ t/_{mn}$   $P = 27 \ Kw$

Cn %

Seuil = c
Seuil = b
Seuil = a

$a < b < c$

FIG.6

$N = 1700 \ t/_{mn}$   P Collecteur = 420 mh

—— Avance = 33°V
- - - Avance optimale

Cn %

54°
54°
46°
38°
40°
36°

## FIG.3

Début

Début phase détente —N→ Fin phase détente —N→

∅

∅

Sauvegarde du Timer = ti

TFi=Timer–ti

Calcul 1/2 Période= ti–ti–1 = Ti

i = i+1

Calcul Période = Ti+Ti–1 =TPi

$$\text{Calcul de } C = \frac{\left| |2| (TF_{i-1}+TF_{i-2}) - (TF_{i-3}+TF_{i-4}) | - |TP_i - TP_{i-2}| - K \right|}{TP_i^3}$$

C>S(Seuil) —N→ $\delta i = 0$

∅

$\delta i = 1$

$$C_n = \frac{100}{n} \sum_{i=1}^{n} \delta i$$

FIG.4

Réglage initial
Moteur neuf
on a: $a < c_n < b$

$C_n < a$ —— N —— $C_n > b$ —— N —— Réglage Correct

Trop riche!
on appauvrit

Trop pauvre!
on enrichit

Appauvrissement $=$ Appauvrissement maximum

Enrichissement $=$ Enrichissement maximum

Défaut
Diagnostic

0 128 817